**Europäisches Patentamt**

**European Patent Office**

**Office européen des brevets**

(19)

(11) Publication number: **0 114 741**
**B1**

(12) **EUROPEAN PATENT SPECIFICATION**

(45) Date of publication of patent specification: **20.04.88**

(51) Int. Cl.⁴: **B 29 C 39/16, B 29 C 67/22**

(21) Application number: **84300270.0**

(22) Date of filing: **17.01.84**

(54) **Production of foams.**

(30) Priority: **21.01.83 GB 8301733**
**25.08.83 US 526494**

(43) Date of publication of application:
**01.08.84 Bulletin 84/31**

(45) Publication of the grant of the patent:
**20.04.88 Bulletin 88/16**

(84) Designated Contracting States:
**AT BE CH DE FR IT LI LU NL SE**

(56) References cited:
**EP-A-0 058 553**
**DE-A-1 504 091**
**DE-B-1 169 648**
**FR-A-1 524 032**
**FR-A-2 023 961**
**FR-A-2 517 591**
**US-A-3 660 548**

(73) Proprietor: **HYMAN INTERNATIONAL LIMITED**
**Hollyville Holmfirth road Greenfield**
**Oldham OL3 7DR Lancashire (GB)**

(72) Inventor: **Griffiths, Anthony Charles Murray**
**3 Beechwood Drive**
**Marple Stockport Cheshire (GB)**

(74) Representative: **Farwell, William Robert et al**
**PHILLIPS & LEIGH 7 Staple Inn Holborn**
**London WC1V 7QF (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

### Field of invention

The invention relates to the production of foamed materials and in particular of polyurethane and other polymer foams, in terms of which it is largely described.

### Prior art methods

Expanded materials, particularly polyurethane foams, are made in both batch and continuous plant. Batch production may be at any desired rate to suit subsequent conversion but is inherently labour intensive, can given variation from block to block, and is wasteful in giving blocks where all six sides are skinned and need trimming. The blocks, foamed in moulds, also show undesirable densification at the corners, which the rising and steadily more viscous material has to be forced to occupy by a weighted, floating cover or other means.

Continuous production as currently practiced in horizontal machines also has major disadvantages. The conventional machines have inherent characteristics of large size and high minimum production rate, arising from the nature of the foaming reaction and the newly formed foam, and the curing time needed before material can be handled. This curing time, typically 5 to 15 minutes for polyurethane, sets the length of the plant once the rate of travel of the conveyor that carries the foamed material is determined. This rate of travel in turn depends on the height of the block required, only a certain steepness of profile being supportable by the material in the early stages of foaming and setting. An over-steep profile gives problems of underrun by dense, unfoamed material, or of slumping of unsupported newly foamed material, or both. The conveyor must travel fast enough to maintain the proper profile, giving a minimum production rate of for example 100—200 kg/min. for 1 metre high polyurethane blocks, and thus a machine length of 40 to 50 metres. Any attempt to reduce the speed of the conveyor to give a lower production rate and hence in principle a shorter machine steepens the profile and caused underrunning or slumping, or both, making production of a uniform block impossible. Large machines thus have to be installed, at heavy capital cost, only to remain unused for much of their time.

The difficulties with these machines, which are described in some detail in for example U.S. Patents Nos. 3 325 823 to D. J. Boon and 3 786 122 to L. Berg, are felt only when full size foam blocks at production rates below 100—200 kg/min. are required, but it is in fact only the very largest producers that can use capacity of that order. Many machines are run only for an hour or two a day, the user spending the rest of the day handling the resulting foam. A typical small foamer producing say 2000 tons or less of finished foam annually might want production at 10% of the above rate for economic operation, and cannot accept the storage and handling problems of large quantities of foam and the cost and space requirements of a large machine. Even middle range producers who can accept the big machines, with their disadvantages, would be better served by machines of lower production rate.

### The origin of the invention

We have found that if the principle of existing machines is abandoned a low production rate machine can be provided. The invention stems from a realization that horizontal production is unnecessary and that in a suitably designed machine foam can be drawn away upwardly rather than horizontally, without interference with the foaming reaction. Such a machine is described in our European Patent Application No. 82 3 00748.9 (published as specification A 0 058 553). In this machine foaming takes place in a diverging expansion enclosure the walls of which have surfaces travelling with the foaming material, which enclosure is defined above by foam already expanded, at the sides by said walls and below by a feed zone for the foam forming materials.

### Other prior proposals

Other proposals have been made for the continuous upward foaming, in West German Patent Specifications Nos. 1 169 648 (Munneke) and 1 504 091 (Continental Gummi-Werke), East German Patent Specification No. 61613 (Berbig) and in Italian Specification No. 851 709 (Tomasoni), (corresponding to German Printed Application No. 1 956 419 and Belgian Specification No. 741 836). We know however of no practical application of these proposals. It appears that problems of control of the reaction and production of a uniform product had not been solved by the proposals as described, so that for all the disadvantages of the large horizontal machines they remained in extensive commercial use.

### The present invention

In the present invention, developed from the invention of EP—A—005855 above, we have achieved successful continuous production of foamed material in a method, and machines for carrying it out, wherein:

i) foam-forming materials are fed from below at a controlled rate and the foamed material formed is drawn away from above at a corresponding rate,

ii) foaming takes place in a diverging expansion enclosure bounded by moving sheet material following a diverging path and drawn away from above so as to travel with the foaming material in an upwardly directed take off path at a rate corresponding to its rate of travel,

iii) the enclosure is defined above by foam already expanded, at the sides by said sheet material, and below by a feed zone sealed to contain the foam forming materials, and characterizing the invention,

iv) the expansion enclosure and conveniently also the feed zone is formed by a flexible tubular web which is fed in collapsed form with foam forming materials passing to the interior of the tube and then drawn away at a rate matched to the rate of feed, guided externally to assume a circular or other cross-section as the foam forming materials expand within it.

Most simply, the tubular web is fed flat between apposed feed rolls, but it will be appreciated that other modes of feeding are possible without departing from the concept of feeding the tube in collapsed form and causing it to take up the required cross-section as the foam forming materials expand within it. For example, a web folded into gussets rather than simply flattened (one side apposed to the other) may be used, or a feed trough for reactants may lie between the rolls with webs passing between the rolls and the sides of the trough. Moreover rolls are merely one convenient means of feeding the web.

Expansion enclosure

The expansion enclosure diverges (in the sense of having increasing cross-sectional area) over the greater part though not necessarily the whole of its volume. Thus it may both begin and end, and conveniently does at least end, with a non-diverging section. The latter in particular is convenient to allow for control tolerances during a run, so that completion of expansion does not have to be matched exactly to the cross-section and there is no danger of expansion being insufficient and leaving a gap of varying width between the expanded mass and the enclosure walls. All shaping of the foam within the enclosure is readily achieved, as is of course necessary, while the foam is still fluid enough to be formed without damage to its structure.

Travelling surfaces

In the early stages the speed of the travelling surfaces formed by the tubular web need not be exactly the same as the translational speed of the foaming mix adjacent to them, though desirably the two speeds approximate. It will be appreciated that tubular webs diverging to provide the travelling surfaces cannot match the speed of the enclosed material both in the diverging and in subsequent parallel portions of the path of the material.

Nevertheless the whole body of material is kept moving during expansion reducing eddy or river bank effects, preventing development of gelled or solidified material on the enclosure walls, and ensuring that material at any given stage of expansion is essentially in the same horizontal plane throughout and that a uniform body of foam is produced. In polyurethane foam production for example, the boundary between still-liquid and gelled material is horizontal or essentially so, uninfluenced by gravity. Underruns or slumping as discussed earlier cannot arise, and any convenient production rate can be adopted with a maximum depending on the length of the material path and thus the dwell time it gives. There is in the foam produced an inherent uniformity of properties, the 'gravity history' of all parts of the block being the same.

The tubular web

The tubular web is conveniently of plastics and may be in a number of forms. For example lay flat tubing may be slit for entry of a feed for the foam forming materials and then re-sealed, or it may be used as a shirred (concertina'd) pack. We prefer however for convenience of layout to feed separate webs and seal them together at the edges as by heat, applied adhesive, or adhesive tape.

The feeding of the tubular web to form the expansion enclosure is suitably through pinch rollers or apposed conveyors to allow the feed rate of the web to be matched easily to the rate at which expanded foam is drawn away, allowing for any stretch of the webs. There is only low tension in the web as it is guided to assume the final section from the initial state, and constant reaction conditions can be maintained in an expansion chamber of a known, predetermined shape. Further, the pinch rollers, particularly if they have a resilient surface, can readily be shaped to allow passage of one or more feeds for the foam forming materials, for example round pipes or even an elongate trough, without leakage of the foam forming materials. These, at least in the case of polyurethane foam, are thin searching liquids difficult to confine.

The guides are conveniently apposed pairs of plain or shaped rollers, but many forms of fixed or moving guide may be used according to the final shape required and the position at which a guide is used. In particular, guides assisting the web to bell out at the sides from the collapsed state as fed, to form the expansion enclosure, are preferably powered rollers or belts passing the web onward with a friction (or even a tacky surface) drive of the material of the web, optionally assisted by suction boxes. The belling out is thus controlled and constrained to give a regular divergence of the enclosure. At the ends, in contrast, simple stationary guides or idler rollers are sufficient. These guides lie across the line in which the web is fed and are simply constraining the web to take an inward path. Interchangeable sets of guides and optionally web feeds for different final block shapes can be provided, for example on a wheel-away bottom section, a particular advantage of the invention.

3

Heating

In another aspect of the invention, applicable to the present machines and to machines generally whether operating vertically or horizontally, heated surfaces are applied at the surfaces of a foam block once fully expanded, to prevent loss of heat from the block and thus achieve cure (for example allowing pins to grip) as early as possible and in a machine of minimum dimensions. Further, a uniform curing rate is secured through the block. In foam blocks as currently made, the interior is fully cured a short time after the stage of full expansion has been reached, while the exterior, cooled by the surroundings, takes much longer, making for unnecessarily large machines and poor block surfaces. In polyurethane blocks for example, an interior temperature of 100°—120°C is readily reached and maintained by the heat of reaction and cure proceeds quickly. Temperatures are however much lower at the block surfaces if unprotected.

The preferred heating is applied over the whole of the surface of the block. Further it is preferably applied by low-output heaters backed by heat insulation, given that the purpose is to ensure that the block does not lose heat to its surroundings by providing a heated environment rather than actually to pass heat to the block. Metal film heating as used in car window demisters is for example suitable, or heating from a carbon loaded polymer film. Low, safe voltages can be used, and at the low outputs of for example 50 to 100 watts/sq. metre that are suitable, no temperatures to cause injury by contact can develop in any part of the heating surface not covered by protective insulation.

In making polyurethane foam in a vertical machine for example a heated zone 1½—2m long may be succeeded by conveyors 2—2½m long, the expansion enclosure being for example 1m high. The 'snow' stage of reaction in which, chemically, the foam is primarily a polyurea and is very weak is then accommodated in the heated zone. Once the succeeding urethane reaction has converted the structure to a rubbery nature pins can take over.

Control of reaction by feed and taken off rates

Control of the foaming reaction is given by matching the take off rate of volume of foam of a given density with the feed rate of volume of reactants of a given density (allowing for any reaction loss of materials that do not appear in the finished foam). As noted earlier it is important that the expansion should not have been completed before the foamed material leaves the diverging part of its path. If it shows a tendency to do so, the total throughput can be increased, or (less conveniently) the reaction rate at a given throughput can be slowed, for example by lowering the temperature or the catalyst concentration. Clearly for a fast reacting foam a smaller expansion chamber is needed at a given speed of removal of finished foam than for a slow-reacting one, as less time is occupied between introduction of the materials and their full foaming and thus less volume of finished foam will have been taken off in that time. In practice a given expansion enclosure volume can be selected, a throughput chosen, considering in its simplest terms weight of reactants in and weight by volume of foam out, and fine control exercised by variation of the throughput within a range of perhaps 10% exercised on all the reactant feed pumps taken together, the position of the full-foaming profile moving up or down accordingly.

Pin conveyors

Pin conveyors are conveniently provided in the take off path to draw the finished foam through. They pierce the tubular web and, provided the conveyor leaves again at an angle gradually diverging from the block path, are readily withdrawn at the top of the path. The finished foam then carries the web on all sides, cut through by the cut off saw, for later stripping. Pins of convenient length for polyurethane foam for example are about 1.5 cm, spaced laterally 5 cm apart and vertically 5 cm apart, though there is no restriction to any particular spacing or length or distribution of pins. Pins of such length enter only the thickness of the block that is normally skimmed off to clean up the faces, but in any case damage by the pins to the block is generally negligible.

Pins, while convenient, are not the sole means that will serve to give transport of the block. For example frictional, perforated conveyor belts assisted by vacuum behind are also suitable where the webs bond sufficiently to the foam block, as they do with, at least, HR polyurethane foam.

Variation of block size and shape

It will be appreciated that the block size is not limited by the foam rise as in horizontal machines. Any block within the limits of size defined by the expansion enclosure and take off path may be produced. This size may in itself be variable if provision is made for varying the separation of opposed parts of the take off path or otherwise varying the block cross-section, with appropriate heated sections where used. For example individual conveyors or groups of conveyors may move in and out with respect to the centre line of the foam path, for any block cross-section, and a machine may convert from one cross-section to another, e.g. round block to rectangular. For example individually driven conveyors may be moved from one disposition to another, or two, three or more grouped conveyors may have carriers hinged to each other, one conveyor in the group conveniently receiving the drive and passing it to the others by universally jointed shafts allowing for the hinging.

Machines according to the invention are illustrated by way of example in the accompanying drawings, in which:—

4

Fig. 1 is an elevation of a machine with frame, walkways and operational parts including expansion enclosure, heated section, conveyors, and a cut-off saw (unreferenced) at the top;

Fig. 2 and Fig. 3 are schematic part sectional elevations of the machine disposed for the production of round block, Fig. 3 being a view in the same direction as Fig. 1;

Fig. 4 is a plan view of the machine on A—A in Fig. 2 showing the expansion enclosure;

Fig. 5 is a section of the machine on B—B in Fig. 2 showing the heated section;

Fig. 6a is a section on C—C in Fig. 2 showing the conveyors in groups;

Fig. 6b shows a modified conveyor configuration;

Figs. 7 to 9a are sketches of part of a rectangular block machine corresponding respectively to Fig. 4 and the bottom parts of Figs. 2 and 3;

Fig. 9b is a sketch of the lower part of a round block machine showing the web guides;

Fig. 10a is a sketch of the use of a shirred pack of tubing as the tubular web; and

Fig. 10b is a sketch of the use of lay flat tubing as the tubular web.

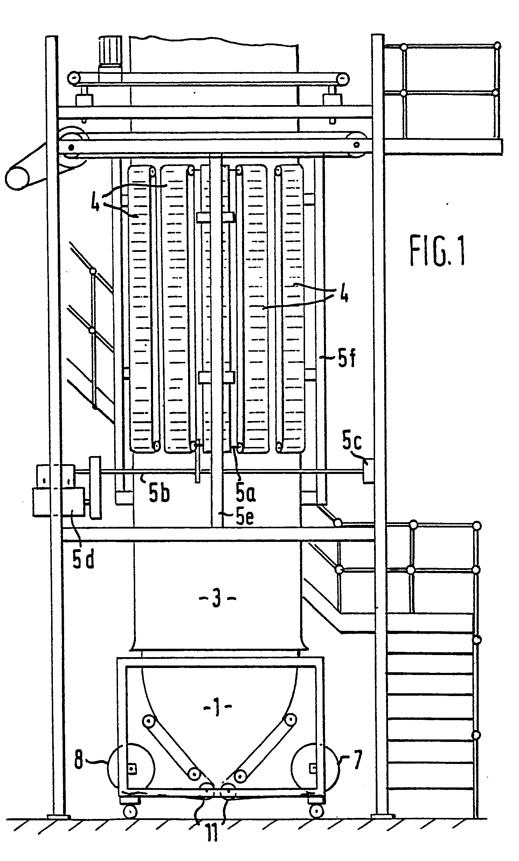

In the machine the general vertical disposition of the expansion enclosure and subsequent foam path is seen, Fig. 1 showing the web path only schematically with its feed rolls (7), (8) mounted on a wheel-away frame. The expansion enclosure (1) leads into the take off path (2) defined by a cylindrical, heated wall section (3) and further up by a series of twelve spiked band conveyors (4) surrounding the path and gripping the foam once it is strong enough to take traction.

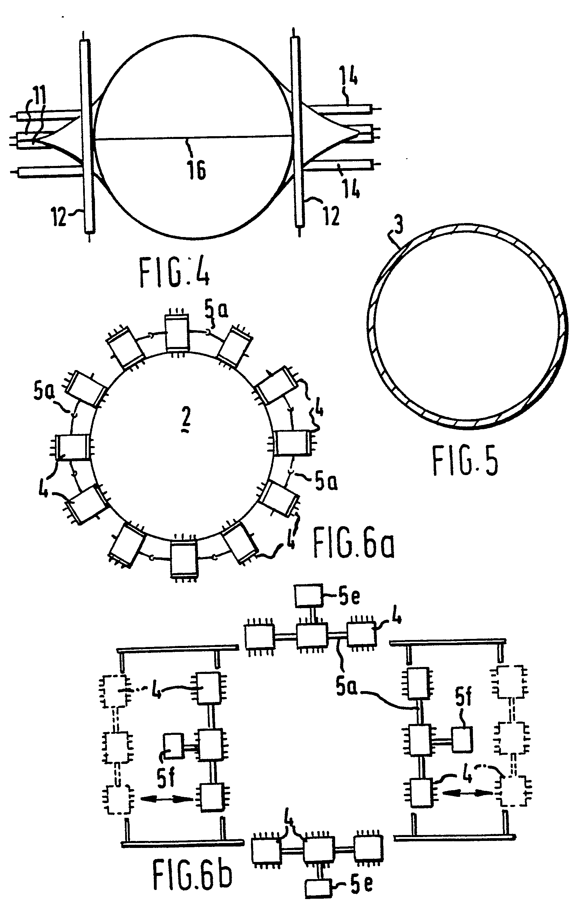

The conveyors, formed of spiked slats carried on chains, run on powered drive wheels (5) and idler wheels (6) in a manner conventional in itself and not described further. They are however grouped in units of three (Fig. 6), the centre conveyor being the driven one and others driven from it by universally jointed shafts 5a in turn driven as seen in Fig. 1 from shafts 5b on the four sides of the machine, interconnected by bevel gear boxes 5c and driven from a common motor 5d. Near the top the conveyors leave the block at an angle, the carrier chains running over guide wheels at each side (not shown). This ensures that the pins leave the block cleanly without dragging the plastics web off it.

In the modified conveyor layout shown in Fig. 6b it is seen how the conveyors can be arranged for the outer conveyors of each group to swing out on hinged mountings (not themselves shown) carried on the frame members 5e, 5f (Fig. 1), to give a rectangular configuration. The frame members 5f further, are mounted to move laterally (Fig. 6b) for variation of block size in the rectangular configuration.

Heating in the wall sections (3) is provided by a conductive, carbon loaded polymer film with electrical supply and insulating backing not shown in detail. Expanded heat resistant polyurethane slab thermal insulation surrounds the heating element formed by the film and in operation of the machine allows effective cure in the relatively short distance between the expansion enclosure and the commencement of the spiked conveyors. Polyurethane foam for example can then take conveyor pins without risk of them tearing through the body of the material, with loss of traction and damage to the surface of the block.

Below the expansion enclosure are feed rolls (7), (8) for a high density polyethylene film suitable for the working temperatures of 100°—120°C, to which it is subjected during formation and cure of the foam, without loss of the strength required. The polyethylene webs are referenced (10) and enter the nip of pinch rollers (11), together with adhesive tape form reels one of which is shown (9). Also present, but not shown, are folding guides which turn over flaps, one at one end of one of the webs and the other at the other end of the other web, so that the tape is fed to lap over from the flap of one web to the unfolded face of the other web. This, when the tubular web formed opens out in formation of the expansion enclosure, gives a joint in which the tape is under shear forces, rather than tending to open up by peeling.

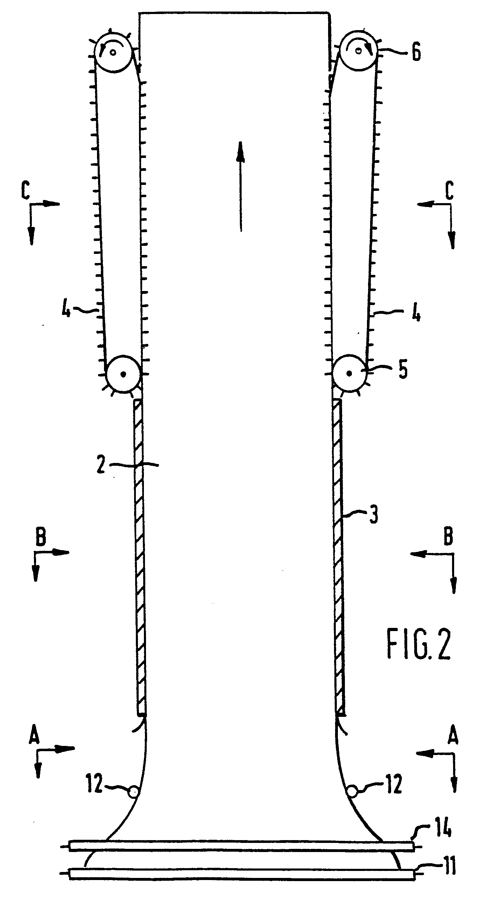

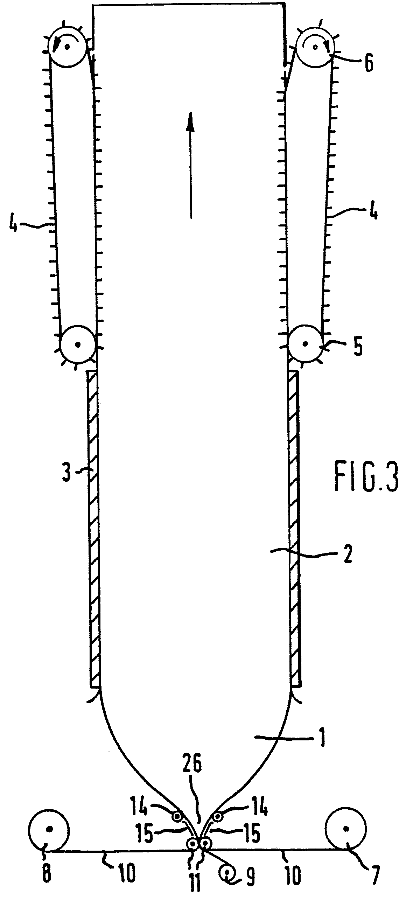

The shaping of the expansion enclosure, helping the natural tendency of the web to assume tubular shape as material expands inside it, is achieved by guides of which several forms are possible. In Figs. 2 and 3 for example are shown simple idler rollers (12) and powered rollers (14), the latter having a rubber surface giving driving, friction engagement with the web. Between the nip rolls (11) and the powered guide rolls (14) are static guides (15), over which the web slides and which prevent any undesired belling out of the web at that position. An alternative would be a pair of belt conveyors of very short travel in relation to their width, either in place of the guide rollers (14) and static guides (15) or replacing both these and the pinch rollers (11) and serving the same function as these. It may be noted from Fig. 3 how the tubular web opens out in the transverse direction to give a smoothly-contoured expansion enclosure, the rate of feed of the pinch rollers (11) and the powered rollers (14) being matched, to that given to the formed foam by the conveyor (4), so that the web is not under tension. The web thus has no tendency to neck in either in the free part at the sides of the expansion enclosure or in the lower part of the take off path within the cylindrical wall, where the foam, although formed, is still very weak. The exact speed of the pinch rollers and rollers (14) in relation to the conveyor speed is controlled independently of the conveyor to allow for stretch in the web, small but not negligible, up to 10% for example.

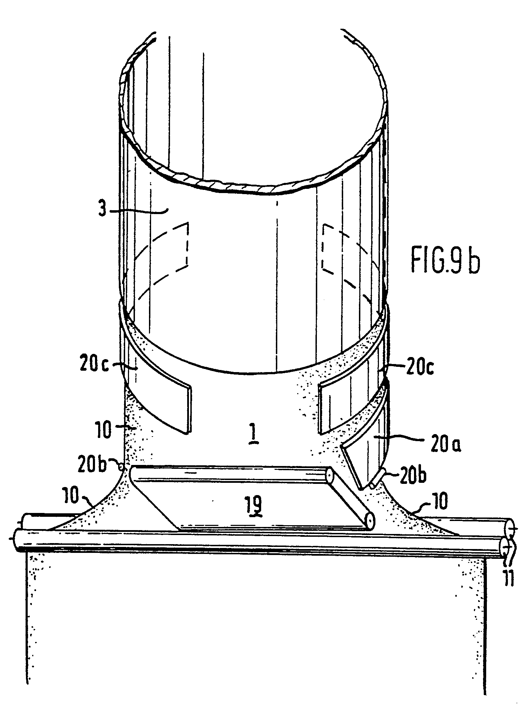

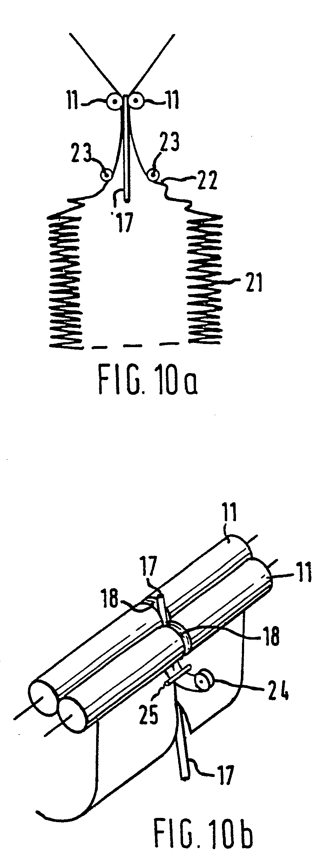

In the longitudinal plane with respect to the pinch rollers, as seen in Fig. 2 (where of course the web feed from below is omitted for clarity), it can be seen how the web travels in from the exit of the pinch rolls to the guide rolls (12), and thence to the entry to the cylindrical take off path. There is no excess of material, such as is needed to form the belled out expansion chamber shape in the other plane, and hence ready control of the web. The shaping shows in Fig. 4 where the nip is seen at (16), and the translation from the flat form as fed to the cylindrical form, in the web, is well seen. In Fig. 10b the manner of entry of a feed pipe (17) is shown, the rolls being grooved as at (18) to allow passage of the pipe. At the low rates of feed required, sealing of reactant feed pipes at the nip is satisfactory if the surfaces of the pinch rolls are flexible, for example of a rubber composition, desirable in any event to give positive frictional engagement with the web in order to feed it in a controlled way.

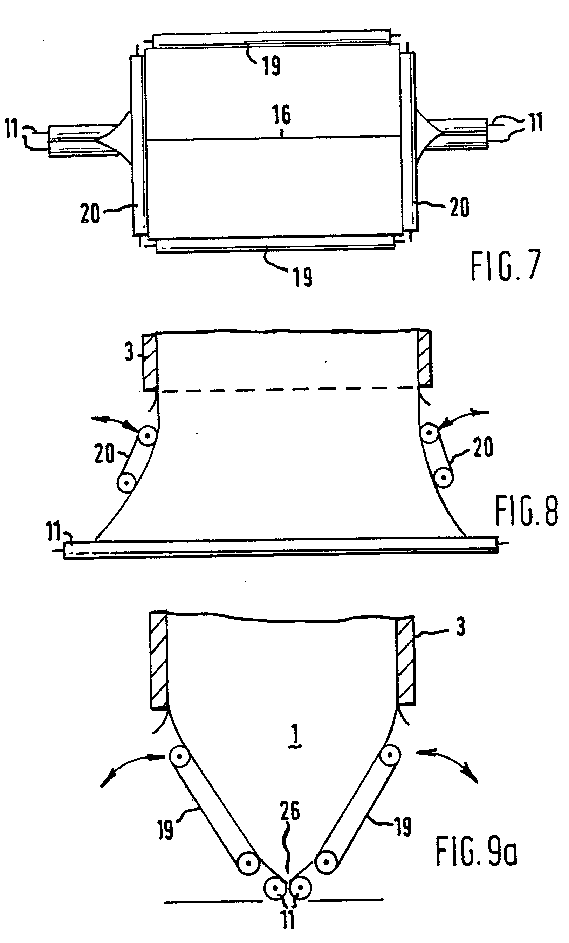

In Fig. 9*b* is shown a more developed version of the web guides, in a round block machine. Feed rolls (11) are used as before. At the sides, the belling out is controlled by powered belts (19) giving a friction drive to the web material while controlling it, the presence of the expanding foam holding the material against the belts though suction can be used as well if required. Near the ends of the feed rolls are small idler rollers (20*b*) and static guides (20*a*). Finally, static curved guides (20*c*) constrain and guide the web before it enters the heated section (3). The expansion enclosure formed is marked (1), and successive visible portions of the web (10).

Fig. 7 is of a machine for rectangular block in a view similar to that of Fig. 4 and Figs. 8 and 9*a* respectively correspond to the bottom part of Figs. 2 and 3. In this embodiment, as before except for the interchangeable bottom section, the shaping guides are pairs of belt conveyors (19), (19) and (20), (20) which guide the web into the shape required. Both pairs are mounted to lie as seen or alternatively to tilt out at the top so their effect is essentially that of the rollers of Fig. 4. The machine is then capable of producing either a rectangular or a round block. It will be noted that in formation of rectangular blocks full-shape guiding is required, while for circular blocks the web tends to the required shape. In all cases large areas of exposed web, unsupported, are undesirable as tending to bulging if the web stretches or any excess is fed.

The web may be fed to the machine, particularly when designed for rectangular-configuration block, in a number of separate sections, for example four, rather than two as previously described, to allow readily for a sufficient perimeter. Further, to avoid excessive length in the feed rolls (11), webs may be fed gusseted. For example two webs may be fed flat, two more, at the ends of the feed rolls, being fed gusseted e.g. folded in a shape that is, when opened up somewhat, the shape of a letter W, with the centre peak forming the gusset (pointing to the interior of the tube to be formed). The gusseted webs may for example lie within the two flat webs at their edges, and be joined to them by adhesive tape as previously described. Gusseting can equally be applied to other numbers of webs, or to lay flat tubing slit and resealed. If desired, it may be applied in round block operation, where very short feed rolls are possible, less even than the diameter of the block. (The required final circumference is πd, where d is the block diameter, and nip rolls the same length as the block diameter can take webs to give a circumference up to 4d, if two gussets extending to the roll centres are used.)

Alternatively to gusseting if the problem is available web width rather than roll length, two flat webs may be fed as before with longitudinally folded webs (forming a V if opened up somewhat, with the apex (base) of the V pointing outwards from the tube to be formed) lying between the flat webs at each side and sealed to them as before. These possibilities are not shown in the drawings but their disposition is readily appreciated.

The heating at 50 or 100 watts per square metre in the cylindrical section (3), backed up by 5 cm thickness of rigid polyurethane board insulation, gives a uniform cure in the block. The high density polyethylene web retains its strength satisfactorily at the temperatures reached.

The sketches of Figs. 10*a* and 10*b* show pinch rolls (11) as before and a reactant feed pipe (17). In Fig. 10*a* a shirred pack of plastics tubing (21) is shown with material being drawn from it at (22) through rolls (23) spreading it to the flat form required for entry to the pinch rolls. In Fig. 10*b* lay flat tubing, slit at one side by a knife (not shown), receives the feed pipe (17) and is then re-sealed by tape from a reel (24) drawn past a guide (25). Otherwise the construction is as before. (The tubular web emerging from the pinch rolls in Fig. 10*b* is omitted for clarity).

Two examples of the use of the machines are outlined below:

Example 1

In this example a 22 kilogram per cubic metre flexible polyether foam is made. The formulation is the following:

| | Parts by weight |
|---|---|
| Polyether polyol, 3500 molecular weight 48 hydroxyl No. | 100 |
| Water | 4.3 |
| Silicone surfactant | 0.9 |
| Amine catalyst—Dabco 33LV: Niax Al (Trade Mark) ratio 3:1 by weight | 0.2—0.35 |
| Tin catalyst—stannous octoate | 0.28 |
| Trichlorofluormethane—Arcton 11 | 1.5 |
| Toluene diisocyanate (80:20 TDA) | 53.6 |

The above is fed by conventional lines and mixing head and gives a block of the following properties:

| | |
|---|---|
| Diameter of finished block | 1.2 metres |
| Area of cross-section | 1.13 sq. metres |
| Volume of expansion enclosure | 0.85 cubic metre |
| Rise time of foam (elapsed time between entry of foam at nip and full expansion, at approximately the position where the cylindrical section 3 begins | 110 seconds |
| Density of finished foam | 22 kilogrammes per cubic metre |
| Mean density of material in expansion enclosure | 44 kilogrammes per cubic metre |
| Mass of foam in expansion enclosure | 37.4 kilogrammes |

Net throughput of foam

$$= \frac{37.4}{110} \times 60 \quad = \quad 20.4 \text{ kilogrammes per minute}$$

Vertical velocity

$$= \frac{20.4}{22} \times 1.13 \quad = \quad 0.82 \text{ metre per minute}$$

Foam of normal properties is produced.

7

Example 3

Production of high resilience flexible polyurethane foam in rectangular block form (HR30).

A conventional HR polyurethane mix is used and successful foam produced, the calculations corresponding to Example 1 being as follows:

| Cross-section | 1.8×1 metre |
|---|---|
| Area of cross-section | 1.8 sq. metres |
| Volume of expansion zone | 1.0 cubic metre |
| Rise time | 110 seconds |
| Density of finished foam | 31 kilogrammes per cubic metre |
| Assumed mean density in expansion enclosure | 62 kilogrammes per cubic metre |
| Mass of foam in expansion enclosure | 62 kilogrammes |

Net throughput

$$= \frac{62}{110} \times 60 \quad = \quad 33.8 \text{ kilogrammes per minute}$$

Vertical velocity

$$= \frac{33.8}{31} \times 1.8 \quad = \quad 0.61 \text{ metre per minute}$$

In use, all the machines show the desirable features

i) Introduction of liquid reactants.

ii) Positive infeed control of film/webs as by the rollers/conveyors.

iii) Positive upward control of foam block as by the pinned conveyors.

iv) Positive control of expansion enclosure shape as by the rollers/static surfaces/conveyors and particularly the frictional/adhesion contact of such with the web ensuring that the shaping of the expansion enclosure is positive rather than simply by hydrostatic pressure.

v) Arrival at required cross-section while foam is still fluid without damage to any developed adhesive structure.

**Claims**

1. A method of continuous production of foamed material, wherein foam forming materials are fed from below at a controlled rate and the foamed material formed is drawn away from above at a corresponding rate; wherein foaming takes place in a diverging expansion enclosure bounded by moving sheet material following a diverging path and drawn away from above so as to travel with the foaming material in an upwardly directed take off path at a rate corresponding to its rate of travel; and wherein the enclosure is defined above by foam already expanded, at the sides by said sheet material, and below by a feed zone sealed to contain the foam forming materials, characterized in that the expansion enclosure and conveniently also the feed zone is formed by a flexible tubular web constituting the sheet material, which is fed in collapsed form with foam forming materials passing to the interior of the tube and then drawn away at a rate matched to the rate of feed, being guided externally to assume a predetermined cross-section as the foam forming materials expand within it.

2. A method according to claim 1 wherein the tubular web is of plastics fed as lay-flat tube slit for entry of a feed for the foam-forming materials and re-sealed thereafter, or from a shirred pack with the feed passing through the centre of the pack, or as separate webs between which the feed passes and which are then sealed together at the edges.

3. A method according to claim 1 or 2 wherein the tubular web is fed by rollers or apposed conveyors at the lowest point of the feed zone and expansion enclosure.

4. A method according to claim 3 wherein said rollers or conveyors have a resilient surface grooved or otherwise shaped to allow passage of one or more feeds for the foam forming materials.

5. A method according to any preceding claim wherein guides assist the tubular web to bell out from

8

the collapsed state, as fed, to form the expansion enclosure, said guides being powered rollers, or belts, passing the web with a friction drive thereof.

6. A method according to any preceding claim wherein spiked conveyors are provided at one or more positions at the sides of the take off path, engaging the foamed material by piercing through the web.

7. A method according to claim 6 wherein the conveyors are parallel to the take off path axis for the greater part of their length but diverge at a small angle over the final part of their length to allow easy withdrawal of the pins from the web.

8. A method according to any preceding claim wherein heated surfaces are applied at the surface of the foam body once fully expanded, to prevent loss of heat from the body and thus secure speedy surface curing.

9. A method according to claim 8 wherein said heating is applied by low output electrical film heaters backed by thermal insulation.

10. A method according to any preceding claim wherein said tubular web is initially in gusseted form said gussets opening out as the foam forming materials expand within the web.

11. A machine for continuous production of foamed material, comprising feed means for feeding foam forming materials from below at a controlled rate, take off means for drawing the foamed material formed away from above at a corresponding rate, means forming a diverging expansion enclosure bounded by moving sheet material constrained to follow a diverging path and drawn away from above so as to travel with the foaming material in an upwardly directed take off path at a rate corresponding to its rate of travel, in which diverging expansion enclosure foaming takes place, said enclosure being defined above by foam already expanded, at the sides by said sheet material, and below by a feed zone sealed to contain the foam forming materials characterized in that the expansion enclosure and conveniently the feed zone is formed by a flexible tubular web, constituting the sheet material, which is fed in collapsed form with foam forming materials passing to the interior of the tube and then drawn away at a rate matched to the rate of feed, guided externally to assume a predetermined open cross-section as the foam forming materials expand within it.

12. A machine according to claim 11 wherein the tubular web is of plastics fed as lay-flat tube slit for entry of a feed for the foam-forming materials and resealed thereafter, or from a shirred pack with the feed passing through the centre of the pack, or as separate webs between which the feed passes and which are then sealed together at the edges.

13. A machine according to claim 11 or 12 wherein the tubular web is fed by rollers or apposed conveyors at the lowest point of the feed zone and expansion enclosure.

14. A machine according to claim 13 wherein said rollers or conveyors have a resilient surface grooved or otherwise shaped to allow passage of one or more feeds for the foam forming materials.

15. A machine according to any one of claims 11 to 14 wherein guides assist the tubular web to bell out from the collapsed state, as fed, to form the expansion enclosure, said guides being powered rollers, or belts, passing the web with a friction drive thereof.

16. A machine according to any one of claims 11 to 15 wherein spiked conveyors are provided at one or more positions at the sides of the take off path, engaging the foamed material by piercing through the web.

17. A machine according to claim 16 wherein the conveyors are parallel to the take off path axis for the greater part of their length but diverge at a small angle over the final part of their length to allow easy withdrawal of the pins from the web.

18. A machine according to any one of claims 11 to 17 wherein heated surfaces are applied at the surface of the foam body once fully expanded, to prevent loss of heat from the body and thus secure speedy surface curing.

19. A machine according to claim 18 wherein said heating is applied by low output electrical film heaters backed by thermal insulation.

20. A machine according to any one of claims 11 to 19 wherein said tubular web is initially in gusseted form said gussets opening out as the foam forming materials expand within the web.

21. A machine according to any one of claims 11 to 20 having sets of expansion enclosure guides and web feed means mounted as interchangeable units for production of blocks of foamed material of different cross-sections.

22. A machine according to any one of claims 11 to 21 wherein multiple conveyors surround the take off path and are mounted for movement in and out with respect to the centre line of the path, for variation of the cross-section of the foamed material produced.

23. A machine according to claim 22, wherein the conveyors are in groups hinged or otherwise mounted with respect to each other within the group for adoption of an arcuate disposition for round block foam production or a linear disposition for rectangular block foam production.

**Patentansprüche**

1. Methode zur kontinuierlichen Herstellung von geschäumtem Material durch Zuführen schaumbildender Materialien von unten mit einer gesteuerten Geschwindigkeit und Entnahme des gebildeten, geschäumten Materials von oben mit einer entsprechenden Geschwindigkeit, wobei das Schäumen in einer divergierenden Expansionseinfassung stattfindet, die durch ein sich bewegendes Bandmaterial begrenzt wird, das der nach oben gerichteten, divergierenden Bahn folgt, sodass sie sich zusammen mit dem schäumenden Material in einer nach oben gerichteten Austrittsbahn mit einer der Verschiebegeschwindigkeit entsprechenden Geschwindigkeit bewegt; und bei der die Einfassung oben durch den bereits ausgedehnten Schaum an den Seiten durch besagtes Bandmaterial und unten durch eine Zuführzone definiert ist, die versiegelt ist, damit sie die schaumbildenden Materialien enthalten kann, dadurch gekennzeichnet, dass die Expansionseinfassung und nützlicherweise auch die Zuführzone aus einer biegsamen, schlauchförmigen Bahn gebildet wird, die das Bahnmaterial bildet, das in zusammengedrückter Form mit schaumbildenden Materialien gespeist wird, die ins Innere des Schlauchs vordringen und dann mit einer der Zuführgeschwindigkeit angepassten Geschwindigkeit abgezogen werden, wobei eine Führung von aussen stattfindet, um einen vorbestimmten Querschnitt zu bilden, wenn die schaumbildenden Materialien sich in seinem Inneren ausdehnen.

2. Methode nach Anspruch 1, bei der die schlauchförmige Bahn aus Plastik ist und durch einen flachen Schlauchspalt zum Einlass der Zufuhr für die schaumbildenden Materialien versehen ist und danach wieder versiegelt wird, oder eine zusammengedrückte Packung bildet, bei der die Zufuhr durch das Zentrum der Packung verläuft, oder getrennte Bahnen, zwischen denen die Zuführ verläuft und die dann an ihren Rändern zusammen versiegelt werden.

3. Methode nach Anspruch 1 oder 2, bei der die schlauchförmige Bahn an der untersten Stelle der Zuführzone und der Expansionseinfassung von Walzen oder entgegengesetzten Förderern gespeist wird.

4. Methode nach Anspruch 3, bei der besagte Walzen oder Förderer eine elastische Oberfläche aufweisen, die entweder gerillt oder anders geformt ist, sodass eine oder mehrere Zufuhren von schaumbildenden Materialien durchgelassen werden können.

5. Methode nach einem der vorangehenden Ansprüche, bei der Führungsmittel die schlauchförmige Bahn darin unterstützen, sich bei der Zufuhr aus dem zusammengedrückten Zustand auszuwölben, um die Expansionseinfassung zu bilden, wobei besagte Führungsmittel motorbetriebene Walzen oder Treibriemen sind, die die Bahn durch Reibantrieb in Bewegung setzen.

6. Methode nach einem der vorangehenden Ansprüche, bei der mit Dornen versehene Förderer an einer oder mehreren Stellen an den Rändern der Austrittsbahn vorgesehen sind, um das geschäumte Material mittels Durchstechens der Bahn aufzunehmen.

7. Methode nach Anspruch 6, bei der die Förderer parallel zur Achse der Austrittsbahn über den grösseren Teil ihrer Länge sind jedoch am Endteil ihrer Länge um einen kleinen Winkel abweichen, um die Entnahme der Dornen aus der Bahn zu erleichtern.

8. Methode nach einem der vorangehenden Ansprüche, bei der vorgewärmte Flächen auf die Fläche mit dem bereits vollständig ausgedehnten Schaumkörper gelegt werden, um einen Wärmeverlust aus dem Körper zu verhindern und so eine schnelle Oberflächenaushärtung zu sichern.

9. Methode nach Anspruch 8, bei der besagtes Heizen durch mit thermischer Isolation ausgestatteten Folienheizgeräte mit niedriger, elektrischer Leistung durchgeführt wird.

10. Methode nach einem der vorangehenden Ansprüche, bei der besagte schlauchförmige Bahn ursprünglich in gefalteter Form vorhanden ist, wobei sich besagte Falten in der Masse glätten, währenddem sich die schaumbildenden Materialien innerhalb der Bahn ausdehnen.

11. Maschine zur kontinuierlichen Herstellung von geschäumtem Material, die folgendes umfasst: Zuführmittel zum Speisen der schaumbildenden Materialien von unten mit einer gesteuerten Geschwindigkeit, Entnahmemittel zum Abziehen des gebildeten, geschäumten Materials von oben mit einer entsprechenden Geschwindigkeit, Mittel zum Bilden einer divergierenden Expansionseinfassung, die durch ein sich bewegendes Bandmaterial eingegrenzt wird, das gezwungen ist, einer divergierenden Bahn zu folgen, und von oben weggezogen wird, um mit dem schäumenden Material in einer nach oben gerichteten Austrittsbahn mit einer seiner Zuführgeschwindigkeit entsprechenden Geschwindigkeit zu folgen, wobei das Schäumen in der divergierenden Expansionseinfassung stattfindet, wobei besagte Einfassung durch bereits ausgedehnten Schaum an den Rändern des besagten Bahnmaterials und unten durch eine versiegelte Zuführzone für die schaumbildende Materialien definiert wird, dadurch gekennzeichnet, dass die Expansionseinfassung und nützlicherweise die Zuführzone durch eine biegsame, schlauchförmige Bahn gebildet wird, die das Bahnmaterial bildet, das in zusammengedrückter Form mit schaumbildenden Materialien gespeist wird, die ins Innere des Schlauches eindringen, und dann mit einer der Zuführgeschwindigkeit angepassten Geschwindigkeit abgezogen werden, um einen vorbestimmten, offenen Querschnitt zu bilden, währenddem die schaubildenden Materialien sich in ihm ausdehnen.

12. Maschine nach Anspruch 11, bei der die schlauchförmige Bahn aus Plastik ist und durch einen flachen Schlauchspalt zum Einlass der Zufuhr für die schaumbildenden Materialien versehen ist und danach wieder versiegelt wird, oder eine zusammengedrückte Packung bildet, bei der die Zufuhr durch das Zentrum der Packung verläuft, oder getrennte Bahnen, zwischen denen die Zufuhr verläuft und die dann an ihren Rändern zusammen versiegelt werden.

13. Maschine nach Anspruch 11 oder 12, bei der die schlauchförmige Bahn an der untersten Stelle der Zuführzone und der Expansionseinfassung von Walzen oder entgegegengesetzten Förderern gespeist wird.

14. Maschine nach Anspruch 13, bei der besagte Walzen und Förderer eine elastische Oberfläche aufweisen, die entweder gerillt oder anders geformt ist, sodass eine oder mehrere Zufuhren der schaumbildenden Materialien durchgelassen werden können.

# 0 114 741

15. Maschine nach einem der Ansprüche 11 bis 14, bei der Führungsmittel die schlauchförmige Bahn darin unterstützen, sich bei der Zufuhr aus dem zusammengedrückten Zustand auszuwölben, um dann die Expansionseinfassung zu bilden, wobei besagte Führungsmittel motorbetriebene Walzen oder Treibriemen sind, die die Bahn durch Reibantrieb in Bewegung setzen.

16. Maschine nach einem der Ansprüche 11 bis 15, bei der die mit Dornen versehenen Förderer an einer oder mehreren Stellen an den Rändern der Austrittsbahn angebracht sind, um das geschäumte Material mittels Durchstechens der Bahn aufzunehmen.

17. Maschine nach Anspruch 16, bei der die Förderer parallel zur Achse der Austrissbahn über den grösseren Teil ihrer Länge angebracht sind, wobei sie am Endteil der Länge um einen kleinen Winkel abweichen, um die Entnahme der Dornen aus der Bahn zu erleichtern.

18. Maschine nach einem der Ansprüche 11 bis 17, bei der vorgewärmte Flächen auf die Fläche mit dem bereits vollständig ausgedehnten Schaumkörper gelegt werden, um einen Wärmeverlust auf dem Körper zu verhindern und so einen schnelle Oberflächenaushärtung zu sichern.

19. Maschine nach Anspruch 18, bei der besagtes Heizén durch mit thermischer Isolation ausgestatteten Folienheizgeräte mit niedriger, elektrischer Leistung durchgeführt wird.

20. Maschine nach einem der Ansprüche 11 bis 19, bei der besagte schlauchförmige Bahn ursprünglich in gefalteter Form vorhanden ist, wobei sich besagte Falten glätten, währenddem sich die schaumbildenden Materialien in der Bahn ausdehnen.

21. Maschine nach einem der Ansprüche 11 bis 20, die Sets von Expansionseinfassungsführungsmitteln und Bahnzufuhrmittel aufweisen, die als auswechselbare Einheiten zur Herstellung von Blöcken von geschäumtem Material mit verschiedenen Querschnitten befestigt sind.

22. Maschine nach einem der Ansprüche 11 bis 21, bei der mehrere Förderer um die Austrittsbahn herum angebracht und zur Hin- und Herbewegung in bezug auf die zentrale Linie die Bahn zur Veränderung der Querschnitte des hergestellten, geschäumten Material vorgesehen sind.

23. Maschine nach Anspruch 22, bei der die Förderer in Gruppen schwenkbar oder ansonsten in bezug aufeinander in der Gruppe angebracht sind, um eine genaue Einstellung zur Herstellung von runden Schaumblöcken oder einer Einstellung zur Herstellung von rechteckigen Schaumblöcken zu gewährleisten.

**Revendications**

1. Procédé de production continue d'un matériau expansé, dans lequel les matières aptes à former le matériau expansé sont débitées par le bas à une allure réglée et le matériau expansé obtenu est évacué par le haut à une allure correspondante; dans lequel l'expansion se produit dans une enceinte d'expansion divergente délimitée par une matière en feuille en mouvement qui suit un trajet divergent et est évacuée par le haut de manière à accompagner le matériau en cours d'expansion dans un trajet d'évacuation dirigé vers le haut à une allure correspondant à celle de son déplacemement; et dans lequel l'enceinte est définie à sa partie supérieure par du matériau qui est déjà expansé, à ses côtés par la matière en feuille et à sa partie inférieure par une zone d'alimentation scellée pour confiner les matières aptes à former le matériau expansé, caractérisé en ce que l'enceinte d'expansion et avantageusement la zone d'alimentation sont formées par une nappe tubulaire flexible constituant la matière en feuille, qui est débitée sous la forme d'un tube aplati dans lequel pénètrent les matières aptes à former le matériau expansé et qui est ensuite évacué à une vitesse correspondant à la vitesse d'alimentation, étant guidé extérieurement de manière à présenter une section transversale prédéterminée lorsque les matières aptes à former le matériau expansé s'expansent dans ce tube.

2. Procédé suivant la revendication 1, dans lequel la nappe tubulaire est en matière plastique débitée sous la forme d'un tube aplati fendu pour permettre l'entrée d'une alimentation pour les matières aptes à former le matériau expansé et rescellé ensuite, ou sous la forme d'un tube plissé en accordéon par le centre duquel passe l'alimentation, ou sous la forme de nappes séparées entre lesquelles passe l'alimentation et qui sont ensuite soudées l'une à l'autre au niveau de leurs bords.

3. Procédé suivant la revendication 1 ou 2, dans lequel la nappe tubulaire est débitée par des rouleaux ou des transporteurs opposés au point le plus bas de la zone d'alimentation et de l'enceinte d'expansion.

4. Procédé suivant la revendication 3, dans lequel les rouleaux ou transporteurs présentent une surface élastique rainurée ou façonnée d'une autre manière pour permettre le passage d'une ou de plusieurs alimentations pour les matières aptes à former le matériau expansé.

5. Procédé suivant l'une quelconque des revendications précédentes, dans lequel des guides aident la nappe tubulaire à s'enfler à partir de son état aplati, au moment de son débit, pour former l'enceinte d'expansion, les guides étant des rouleaux entraînés ou des courroies qui font avancer la nappe par entraînement à friction.

6. Procédé suivant l'une quelconque des revendications précédentes dans lequel des transporteurs à picots sont prévus à un ou plusieurs endroits au niveau des côtés du trajet d'évacuation, et attaquent le matériau expansé en perçant la nappe.

7. Procédé suivant la revendication 6, dans lequel les transporteurs sont parallèles à l'axe du trajet d'évacuation sur la majeure partie de leur longueur, mais divergent sous un petit angle sur la partie finale de leur longueur pour permettre un retrait aisé des picots de la nappe.

8. Procédé suivant l'une quelconque des revendications précédentes, dans lequel des surfaces chauffées sont appliquées à la surface du corps expansé dès que l'expansion est complète pour empêcher une déperdition de chaleur du corps et ainsi obtenir un durcissement superficiel rapide.

9. Procédé suivant la revendication 8, dans lequel le chauffage est appliqué par des éléments chauffants à pellicule électrique de faible puissance doublés d'une isolation thermique.

10. Procédé suivant l'une quelconque des revendications précédentes, dans lequel la nappe tubulaire est initialement pliée avec des soufflets, les soufflets s'ouvrant lorsque les matières aptes à former le matériau expansé s'expansent dans la nappe.

11. Machine pour la production continue de matériau expansé, comprenant un dispositif d'alimentation pour débiter des matières aptes à former le matériau expansé par le bas à une allure réglée, un dispositif d'évacuation pour évacuer le matériau expansé formé par le haut à une allure correspondante, un dispositif formant une enceinte d'expansion divergente délimitée par une matière en feuille en mouvement forcée du suivre un trajet divergent et évacuée par le haut de manière à accompagner le matériau en cours d'expansion dans un trajet d'évacuation dirigé vers le haut à une vitesse correspondant à sa vitesse de déplacement, l'expansion se produisant dans l'enceinte d'expansion divergente qui est définie, à sa partie supérieure, par le matériau déjà expansé, à ses côtés par la matière en feuille et à sa partie inférieure par une zone d'alimentation scellée pour confiner les matières aptes à former le matériau expansé, caractérisée en ce que l'enceinte d'expansion et, avantageusement, la zone d'alimentation sont formées par une nappe tubulaire flexible constituant la matière en feuille qui est débitée sous la forme d'un tube aplati dans lequel pénètrent les matières aptes à former le matériau expansé et qui est ensuite évacué à une vitesse adaptée à la vitesse d'alimentation, et guidé extérieurement pour présenter une section transversale ouverte prédéterminée à mesure que les matières aptes à former le matériau expansé s'expansent dans ce tube.

12. Machine suivant la revendication 11, dans laquelle la nappe tubulaire est en matière plastique débitée sous la forme d'un tube aplati fendu pour permettre l'entrée d'une alimentation des matières aptes à former le matériau expansé et rescellé ensuite, ou d'un tube plissé en accordéon dans le centre duquel passe l'alimentation, ou de nappes séparées entre lesquelles l'alimentation passe et qui sont ensuite soudées l'une à l'autre au niveau de leurs bords.

13. Machine suivant la revendication 11 ou 12, dans laquelle la nappe tubulaire est débitée par des rouleaux ou des transporteurs opposés situés au point le plus bas de la zone d'alimentation et de l'enceinte d'expansion.

14. Machine suivant la revendication 13, dans laquelle les rouleaux ou les transporteurs comportent une surface élastique rainurée ou façonnée d'une autre manière pour permettre le passage d'une ou de plusieurs alimentations pour les matières aptes à former le matériau expansé.

15. Machine suivant l'une quelconque des revendications 11 à 14, dans laquelle des guides aident la nappe tubulaire à s'enfler à partir de l'état aplati initial poour former l'enceinte d'expansion, les guides étant des rouleaux entraînés ou des courroies qui font progresser la nappe par entraînement par friction.

16. Machine suivant l'une quelconque des revendications 1 à 15, dans laquelle des transporteurs à picots sont prévus à un ou plusieurs endroits aux côtés du trajet d'évacuation et attaquent le matériau expansé en perçant la nappe.

17. Machine suivant la revendication 16, dans laquelle les transporteurs sont parallèles à l'axe du trajet d'évacuation sur la majeure partie de leur longueur, mais divergent sous un petit angle dans la partie finale de leur longueur pour permettre un retrait aisé des picots de la nappe.

18. Machine suivant les revendications 11 à 17, dans laquelle des surfaces chauffées sont appliquées à la surface du corps expansé dès que l'expansion est complète pour empêcher toute déperdition de chaleur du corps et ainsi obtenir un durcissement superficiel rapide.

19. Machine suivant la revendication 18, dans laquelle le chauffage est appliqué par des éléments chauffants à pellicule électrique de faible puissance doublés d'une isolation thermique.

20. Machine suivant l'une quelconque des revendications 11 à 19, dans laquelle la nappe tubulaire est initialement sous une forme pliée avec soufflets, les soufflets s'ouvrant lorsque les matières aptes à former le matériau expansé s'expansent dans la nappe.

21. Machine suivant l'une quelconque des revendications 11 à 20 comportant des jeux de guides pour l'enceinte d'expansion et des moyens d'alimentation de nappe montés sous la forme d'unités interchangeables en vue de la production de blocs de matériau expansé de sections transversales différentes.

22. Machine suivant l'une quelconque des revendications 11 à 21, dans laquelle des transporteurs multiples entourent le trajet d'évacuation et sont montés de manière à se déplacer vers l'intérieur et vers l'extérieur par rapport à l'axe central du trajet, en vue de modifier la section transversale du matériau produit.

23. Machine suivant la revendication 22, dans laquelle les transporteurs sont disposés en des groupes articulés ou montés d'une autre manière les uns par rapport aux autres à l'intérieur du groupe en vue d'adopter une disposition arquée pour produire du matériau expansé en bloc rond ou une disposition linéaire pour produire du matériau expansé en bloc rectangulaire.

FIG.1

FIG. 2

FIG.3

FIG.4

FIG.5

FIG.6a

FIG.6b

FIG.7

FIG.8

FIG.9a

FIG.9 b

FIG. 10a

FIG. 10b